(19) Europäisches Patentamt / European Patent Office / Office européen des brevets

(11) **EP 4 507 117 A1**

(12) **EUROPEAN PATENT APPLICATION**
published in accordance with Art. 153(4) EPC

(43) Date of publication:
**12.02.2025 Bulletin 2025/07**

(21) Application number: **22950012.9**

(22) Date of filing: **15.09.2022**

(51) International Patent Classification (IPC):
**H01M 50/593** (2021.01)

(52) Cooperative Patent Classification (CPC):
**H01M 50/30; H01M 50/593;** Y02E 60/10

(86) International application number:
**PCT/CN2022/119151**

(87) International publication number:
**WO 2024/007451 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2022 CN 202221731011 U**

(71) Applicant: **Contemporary Amperex Technology
(Hong Kong) Limited
Central, Central And Western District (HK)**

(72) Inventors:
• YANG, Piaopiao
  Ningde, Fujian 352100 (CN)
• LI, Yao
  Ningde, Fujian 352100 (CN)
• CHEN, Xiaobo
  Ningde, Fujian 352100 (CN)
• CAI, Jiajin
  Ningde, Fujian 352100 (CN)

(74) Representative: **Rowlands, Stuart Michael et al
Maucher Jenkins
Seventh Floor Offices
Artillery House
11-19 Artillery Row
London SW1P 1RT (GB)**

(54) **BATTERY AND ELECTRICAL APPARATUS**

(57) The present application discloses a battery and an electrical apparatus. The battery comprises a battery cell, a functional component and an insulating layer. The battery cell is provided with a pressure release mechanism. The functional component is connected to the battery cell and is provided with an avoidance structure, the avoidance structure being used for avoiding a substance discharged by the battery cell via the pressure release mechanism. At least part of the insulating layer is arranged in an area of the functional component corresponding to the avoidance structure. The insulating layer can insulate and isolate the functional component from the area corresponding to the avoidance structure and from the battery cell, increasing the creepage distance and the insulating gap between the functional component and the battery cell, thereby further reducing the risk of a discharge between the functional component and the battery cell, and improving safety.

Fig. 2

# Description

## CROSS REFERENCE TO RELATED APPLICATION

This application claims priority to Chinese Patent Application No. 202221731011.3, titled "BATTERY AND ELECTRICITY-CONSUMING DEVICE" and filed on July 07, 2022, which is hereby incorporated by reference in its entirety.

## TECHNICAL FIELD

The present application relates to the technical field of battery, and in particular to a battery and an electricity-consuming device.

## BACKGROUND

Batteries are widely used in electronic devices, such as mobile phones, laptops, battery vehicles, electric cars, electric planes, electric ships, electric toy cars, electric toy ships, electric toy planes and electric tools.

One research direction in the development of the battery technology is how to improve the safety of the battery.

## SUMMARY

The present application provides a battery and an electricity-consuming device that can improve the safety.

In a first aspect, embodiments of the present application provide a battery including a battery cell, a functional part and an insulating layer. The battery cell is provided with a pressure-relieving mechanism. The functional part is connected to the battery cell and provided with an avoidance structure which is configured to avoid materials discharged by the battery cell through the pressure-relieving mechanism. At least a portion of the insulating layer is arranged within a region of the functional part corresponding to the avoidance structure.

In the above technical solution, the avoidance structure can avoid at least a portion of the materials released by the battery cell through the pressure-relieving mechanism, so as to reduce the risk of functional part blocking the released materials and improve the safety. The insulating layer can insulate and isolate the region of the functional part corresponding to the avoidance structure from the battery cell, and increase a creepage distance and an insulating gap between the functional part and the battery cell, reduce the risk of the electrical discharge between the functional part and the battery cell, and improve the safety. The insulating layer can separate a portion of the materials released by the battery cell from the functional part, so as to reduce the risk that the functional part may be conducted with the battery cell through the materials released by the battery cell and improve the safety.

In some embodiments, the avoidance structure includes an avoidance concave part arranged on a side of the functional part facing the battery cell, a bottom wall of the avoidance concave part is opposite to the pressure-relieving mechanism, and the bottom wall of the avoidance concave part is provided with a weak region. The insulating layer is at least arranged on a side wall of the avoidance concave part.

When the high-temperature and high-pressure materials are released by the battery cell through the pressure-relieving mechanism, the weak region is broken under the impact of the high-temperature and high-pressure materials, so as to form a passage on the bottom wall of the avoidance concave part through which the high-temperature and high-pressure materials pass, thereby reducing the risk of the functional part blocking the high-temperature and high-pressure materials and improving the safety. In the present application, by arranging the avoidance concave part, a distance between the battery cell and the side wall of the avoidance concave part and a distance between the battery cell and the bottom wall of the avoidance concave part can increase; the insulating layer can insulate and isolate the side wall of the avoidance concave part from the battery cell, increase the creepage distance and the insulating gap between functional part and the battery cell, reduce the risk of the electrical discharge of the battery cell, and improve the safety.

In some embodiments, the insulating layer is further arranged on the bottom wall of the avoidance concave part. The insulating layer can insulate and isolate the bottom wall of the avoidance concave part from the battery cell, increase the creepage distance and insulation gap between the bottom wall of the avoidance concave part and the battery cell, reduce the risk of the electrical discharge of battery cell, and improve the safety.

In some embodiments, an angle between the side wall of the avoidance concave part and the bottom wall of the avoidance concave part is an obtuse angle. When an external device sprays insulating paint in a direction perpendicular to the bottom wall of the avoidance concave part, the insulating paint can better adhere to the side wall of the inclined avoidance concave part.

In some embodiments, the avoidance structure includes a through hole opposite to the pressure-relieving mechanism, and the insulating layer covers a hole wall face of the through hole.

The materials released by the pressure-relieving mechanism can pass through the through hole, so as to reduce the risk of the functional part blocking the materials discharging, so that the internal pressure of the battery cell can be released quickly to reduce the safety risk. The insulating layer can cover the hole wall face of the through hole, so as to increase the creepage distance between the hole wall face and the battery cell, reduce the risk the electrical discharge of the battery cell, and improve the safety.

In some embodiments, the functional part includes a first surface facing the battery cell and a second surface facing away from the battery cell, and the through hole extends from the first surface to the second surface. A portion of the insulating layer is arranged on the first surface. The insulating layer can cover at least part of the first surface, so as to increase the creepage distance between the functional part and the battery cell, reduce the risk of the electrical discharge of the battery cell, and improve the safety.

In some embodiments, the insulating layer includes a first portion, a second portion and a third portion, the second portion is arranged on the hole wall face of the through hole, the first portion is arranged on the first surface, and the third portion is arranged on the second surface.

The insulating layer covers a region of the functional part surrounding the through hole so as to completely cover the hole wall face of the through hole, thereby reducing the risk of the electrical discharge of the battery cell to the hole wall face. By arranging the first portion and the third portion of the insulating layer, a connecting area between the insulating layer and the functional part can increase, and the risk of the insulating layer falling off can be reduced.

In some embodiments, the second portion includes a first sub-portion and a second sub-portion, the first sub-portion and the second sub-portion contact with each other and jointly cover the hole wall face of the through hole, the first sub-portion and the first portion are integrally formed, and the second sub-portion and the third portion are integrally formed. The insulating layer can be formed by two insulating sheets engaged by interlocking with each other, one of the insulating sheets includes the first portion and the first sub-portion, and the other of the insulating sheets includes the second sub-portion and the third portion. The engaging manner by interlocking can simplify the assembly process.

In some embodiments, an aperture of the through hole gradually increases or decreases in a direction away from the battery cell. The through hole varies in aperture, so that the hole wall face can be inclined relative to an axial direction. When the external device sprays the insulating paint in the axial direction, the insulating paint can better adhere to the hole wall face.

In some embodiments, the through hole includes a first hole segment and a second hole segment, and the second hole segment is communicated with the first hole segment and located on a side of the first hole segment away from the battery cell. An aperture of the first hole segment gradually increases in a direction away from the second hole segment, and an aperture of the second hole segment gradually increases in a direction away from the first hole segment. The through hole varies in aperture, so that the hole wall face can be inclined relative to the axial direction. When the external device sprays the insulating paint in the axial direction, the insulating paint can better adhere to the hole wall face.

In some embodiments, the through hole is a stepped hole including a first hole segment close to the battery cell and a second hole segment away from the battery cell, and an aperture of the first hole segment is larger than or smaller than an aperture of the second hole segment. The through hole is a stepped hole, so when the external device sprays the insulating paint in the axial direction, the insulating paint can adhere to a step of the hole wall face to improve the insulation of the hole wall face and reduce the safety risk.

In some embodiments, a flow passage for accommodating a heat-exchanging medium is provided in the functional part. The battery further includes a partition structure separating the avoidance structure from the flow passage, and the partition structure is configured to activate when the battery cell releases the materials through the pressure-relieving mechanism to communicate the avoidance structure with the flow passage.

When the battery cell works normally, the partition structure can separate the avoidance structure from the flow passage to reduce the risk of the leakage of the heat-exchanging medium. When the battery cell is thermal runaway, the high-temperature and high-pressure materials inside the battery cell is released from the pressure-relieving mechanism and passes through the avoidance structure, and the separating function of the partition structure fails. The heat-exchanging medium can enter the avoidance structure and cool the high-temperature and high-pressure materials passing through the avoidance structure to reduce the safety risk.

In some embodiments, the flow passage is provided with a first opening communicated with the avoidance structure, and the partition structure is adapted to close the first opening to separate the avoidance structure from the flow passage. By forming the first opening, the heat-exchanging medium can be directly ejected on the high-temperature and high-pressure materials passing through the avoidance structure, so as to reduce the temperature in time and reduce the safety risk.

In some embodiments, the first opening is opposite to the pressure-relieving mechanism in an axial direction of the first opening. When the partition structure is actuated, the heat-exchanging medium is ejected through the first opening, and the ejected heat-exchanging medium can be aligned with the pressure-relieving mechanism, so that the heat-exchanging medium can be ejected into an interior of the battery cell, thereby cooling the battery cell, slowing down the reaction inside the battery cell, and reducing the safety risk.

In some embodiments, the insulating layer is provided with a second opening opposite to the first opening. The second opening is provided to avoid the heat-exchanging medium when the heat-exchanging medium is ejected through the first opening, so that the heat-exchanging medium can quickly act on the high-temperature and high-pressure materials released by the battery cell.

In some embodiments, a melting point of the partition structure is lower than a melting point of the functional part, and the partition structure is configured to melt when the battery cell releases the materials through the pressure-relieving mechanism. When the high-temperature and high-pressure materials released from the pressure-relieving mechanism passes through the avoidance structure, the temperature of a region of the functional part close to the avoidance structure increase, and the partition structure is melted; it is difficult to block the heat-exchanging medium after the partition structure is melted, and the heat-exchanging medium can flow out from the flow passage and eject into the avoidance structure.

In some embodiments, a material of the partition structure is plastic or metal.

In some embodiments, the functional part includes a first plate and a second plate arranged to be stacked with each other, the flow passage is formed between the first plate and the second plate, and the avoidance structure includes a through hole penetrating through the first plate and the second plate.

In some embodiments, the battery further includes an insulating part. At least a portion of the insulating part is located between the battery cell and the functional part. The insulating part can insulate and isolate the functional part from the battery cell, and increase the creepage distance and the insulating gap between functional part and the battery cell, thereby reducing the risk of the electrical discharge between functional part and battery cell and improving the safety.

In some embodiments, the battery cell is arranged on a side of the functional part in a thickness direction of the functional part. In the thickness direction, a minimum thickness of a portion of the insulating part located between the battery cell and the functional part is $\delta$, a maximum thickness of the functional part is H, $\delta$ and H satisfy: $0.001 \leq \delta/H \leq 100$. The value of $\delta/H$ is limited to 0.001-100 to balance the safety and the heat-exchanging efficiency of the battery.

In some embodiments, a value of H is in a range of 0.1mm-100mm, a value of $\delta$ is in a range of 0.1mm-10mm.

In some embodiments, the insulating part includes a first insulating part, a second insulating part and an insulating adhesive layer stacked with one another in the thickness direction, the first insulating part is attached to the functional part, the second insulating part is attached to the battery cell, and the insulating adhesive layer is bonded between the first insulating part and the second insulating part.

The first insulating part and the second insulating part can function as the double-layer insulating protection, so as to improve the insulating effect between the functional part and the battery cell. The insulating adhesive layer can not only realize the connection between the functional part and the battery cell, but also improve the insulation between the functional part and the battery cell.

In some embodiments, the insulating layer is connected to the first insulating part. The first insulating part is connected to the insulating layer to reduce an exposed region of the functional part, increase the creepage distance between the functional part and the battery cell, reduce the risk of the electrical discharge of the battery cell, and improve the safety.

In a second aspect, embodiments of the present application provide an electricity-consuming device, including the battery according to any one of embodiments in the first aspect, which is configured to supply an electric power.

**BRIEF DESCRIPTION OF THE DRAWINGS**

The features, advantages and technical effects of exemplary embodiments of the present application will be described below with reference to the drawings.

Fig. 1 shows a structural schematic view of a vehicle according to some embodiments of the present application;
Fig. 2 shows an exploded structural schematic of a battery according to some embodiments of the present application;
Fig. 3 shows a cross-sectional schematic view of a battery according to some embodiments of the present application;
Fig. 4 shows an enlarged schematic view of the battery at circle frame A of Fig. 3;
Fig. 5 shows a structural schematic view of a functional part of a battery according to some embodiments of the present application;
Fig. 6 shows a partial cross-sectional schematic view of a battery according to some other embodiments of the present application;
Fig. 7 shows a partial schematic view of a functional part of a battery according to some other embodiments of the present application;
Fig. 8 shows a partial cross-sectional schematic view of a battery according to some other embodiments of the present application;
Fig. 9 shows a partial cross-sectional schematic view of a battery according to some other embodiments of the present application;
Fig. 10 shows an enlarged schematic view of a portion at circular frame C of Fig. 9;
Fig. 11 shows a partial cross-sectional schematic view of a battery according to some other embodiments of the present application;
Fig. 12 shows a partial cross-sectional schematic view of a functional part of a battery according to some other embodiments of the present application;
Fig. 13 shows a partial cross-sectional schematic view of a functional part of a battery according to some other embodiments of the present application;
Fig. 14 shows a partial cross-sectional schematic view of a functional part of a battery according to some other embodiments of the present application;

Fig. 15 shows a partial cross-sectional schematic view of a battery according to some other embodiments of the present application;

Fig. 16 shows an enlarged schematic view at circular frame D of Fig. 15;

Fig. 17 shows a partial cross-sectional schematic view of a battery according to some other embodiments of the present application;

Fig. 18 shows a partial cross-sectional schematic view of a battery according to some other embodiments of the present application; and

Fig. 19 shows an enlarged schematic view at circular frame B of Fig. 3.

The reference numerals in the specific embodiments are as follows:

1-vehicle; 2-battery; 3-controller; 4-motor;
10-battery cell; 11-pressure-relieving mechanism;
20-functional part; 21-first plate; 22-second plate;
23-flow passage; 231-first opening; 24-through hole;
241-first hole segment; 242-second hole segment;
24a-hole wall face; 25-avoidance structure; 26-avoidance concave part; 261-bottom wall of avoidance concave part; 261a-weak region; 262-side wall of avoidance concave part; 20a-first surface; 20b-second surface;
30-insulating part; 31-first insulating part; 32-second insulating part; 33-insulating adhesive layer;
34- insulating layer; 341-first portion; 342-second portion; 3421-first sub-portion; 3422-second sub-portion; 343-third portion; 344-second opening;
40-housing; 50-cover plate; 60-partition structure;
X-axial direction; Z-thickness direction.

## DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a part of the embodiments of the present application, and not all of them. Based on the described embodiments of the present application, all other embodiments obtained by those skilled in the art fall within the scope of the application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

The term "parallel" in the present application not only includes an absolute parallelism situation, but also a general parallelism situation recognized in engineering; in addition, the term "vertical" not only includes an absolute vertical situation, but also a general vertical situation recognized in engineering.

In the present application, a battery cell may include a lithium-ion battery cell, a lithium-sulfur battery cell, a sodium lithium ion battery cell, a sodium ion battery cell, a magnesium ion battery cell and the like, which is not limited in the embodiments of the present application.

The battery mentioned in the embodiments of the present application refers to a single physical module that includes one or more battery cells to provide higher voltage and capacity. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer applied on the surface of the positive electrode current collector. The positive electrode current collector includes a positive electrode current collecting portion and a positive electrode tab. The positive electrode current collecting portion is coated with the positive electrode active material layer, and the positive electrode tab is not coated with the positive electrode active material layer. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer applied on the surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The material of the negative electrode current collector may be copper, and the negative electrode active material layer includes a negative electrode active material, which may be carbon, silicon or the like. The material of the separator may be PP (polypropylene), PE (polyethylene) or the like.

The development of battery technology needs to consider various design factors simultaneously, such as energy density, cycle service life, electrical discharge capacity, charge discharge rate and other performance parameters. In addition, it is also necessary to consider the safety of the battery.

A pressure-relieving mechanism of the battery cell has a significant impact on the safety of the battery cell. For example, when short circuit, overcharging or some other phenomena occur, the battery cell may be out of control in heat at an interior thereof, resulting in a sudden increase in pressure. In this case, the internal pressure can be released outward through the actuation of the pressure-relieving mechanism to prevent the explosion and fire of the battery cell.

The pressure-relieving mechanism may be an element or a part that is activated when the battery cell reaches a certain condition. Exemplarily, a pressure-relieving mechanism can be an element or part that is actuated to release the internal pressure and/or the internal materials when the internal pressure or the temperature of the battery cell reaches a predetermined threshold. The threshold design can vary depending on the design requirements. The threshold may depend on one or more materials in the positive electrode sheet, the negative electrode sheet, the electrolyte and the separator of the battery cell.

The pressure-relieving mechanism can be in the form of an explosion-proof valve, a gas valve, a pressure-relieving valve, a safety valve or the like, and specifically can adopt a pressure-sensitive element or structure. That is, when the internal pressure of the battery cell reaches the predetermined threshold, the pressure-relieving mechanism executes an action or a weak region provided in the pressure-relieving mechanism is broken, so as to form an opening or a passage for relieving the internal pressure. Alternatively, the pressure-relieving mechanism can adopt a temperature-sensitive element or structure. That is, when the internal temperature of the battery cell reaches the predetermined threshold, the pressure-relieving mechanism executes an action, so as to form an opening or a passage for relieving internal pressure. Alternatively, the pressure-relieving mechanism can be a part that can be activated actively. For example, the pressure-relieving mechanism can be activated upon receiving a control signal from the battery.

The "activated" mentioned in the present application refers that the pressure-relieving mechanism takes the action or starts to a certain state, thereby allowing the internal pressure of the battery cell to be released. The action generated by the pressure-relieving mechanism includes but is not limited to: at least a portion of the pressure-relieving mechanism broken, crushing, tearing or opening. When the pressure-relieving mechanism is activated, the high-temperature and high-pressure materials inside the battery cell will be released from an activated portion as emissions. In this way, the battery cell can be depressurized under the controllable pressure, thereby avoiding the potential and more serious accidents.

The emissions from battery cells mentioned in the present application include but are not limited to: the electrolyte, the dissolved or split positive negative electrode sheet and negative electrode sheet, fragments of the separator, high-temperature and high-pressure gas generated by reactions and flame.

In related art, the battery cell needs to be connected to a functional part, which can achieve a specific function to satisfy the needs of battery cell. The inventors notice that the functional part may block the pressure-relieving mechanism, which may cause the substances released by the battery cell to be unable to be discharged smoothly, thereby posing a safety hazard.

The inventors attempt to arrange an avoidance structure on the functional part, which can avoid the materials released by the battery cell via the pressure-relieving mechanism, so as to reduce the risk of the functional part blocking the released materials and improve the safety.

The inventors further notice that a region of the avoidance structure corresponding to the functional part lacks the insulating protection, and there may be an electrical discharge phenomenon between the functional part and the battery cell, which may lead to the safety hazard such as ignition.

In view of this, embodiments of the present application provide a technical solution that the region of the avoidance structure corresponding to the functional part is provided with an insulating layer, so that it can reduce the risk of the electrical discharge between the functional part and the battery cell and improve the safety.

The technical solution described in the embodiments of the present application is applicable to an electricity-consuming device using a battery.

The electricity-consuming device may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming device.

For the convenience of explanation, the following embodiments take a vehicle being as the electricity-consuming device as an example to illustrate.

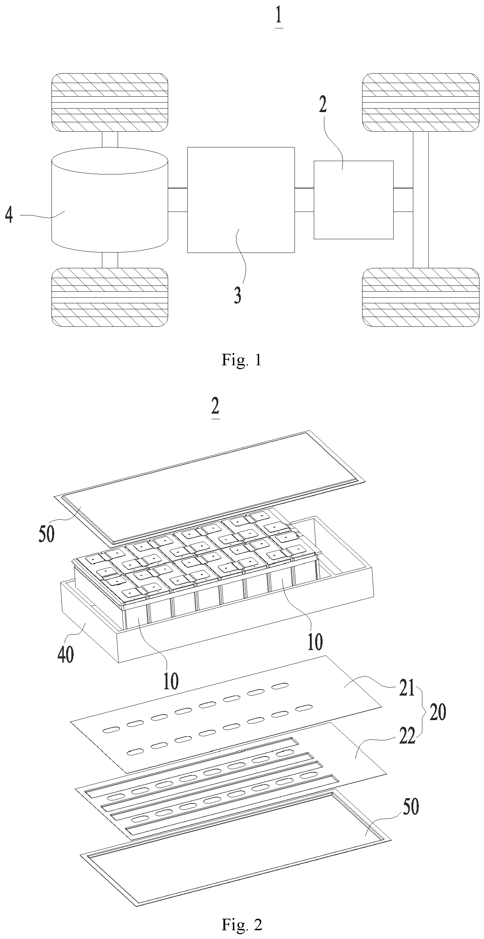

Fig. 1 shows a structural schematic view of a vehicle according to some embodiments of the present application.

As shown in Fig. 1, a battery 2 may be arranged inside the vehicle 1, and the battery 2 may be arranged in the bottom, the front or the back of the vehicle 1. The battery 2 can be used to supply power to the vehicle 1, for example, the battery 2 can be used as an operating power source of the vehicle 1.

The vehicle 1 may further include a controller 3 and a motor 4, the controller 3 can be used to control the battery 2 to supply power to the motor 4, for example, for satisfying the work electricity needs of the vehicle 1 during starting, navigating and driving.

In some embodiments of the present application, the battery 2 can not only serve as an operating power source for the vehicle 1, but also as a driving power source for the vehicle 1, so as to replace or partially replace the fuel or the natural gas and provide the driving power for the vehicle 1.

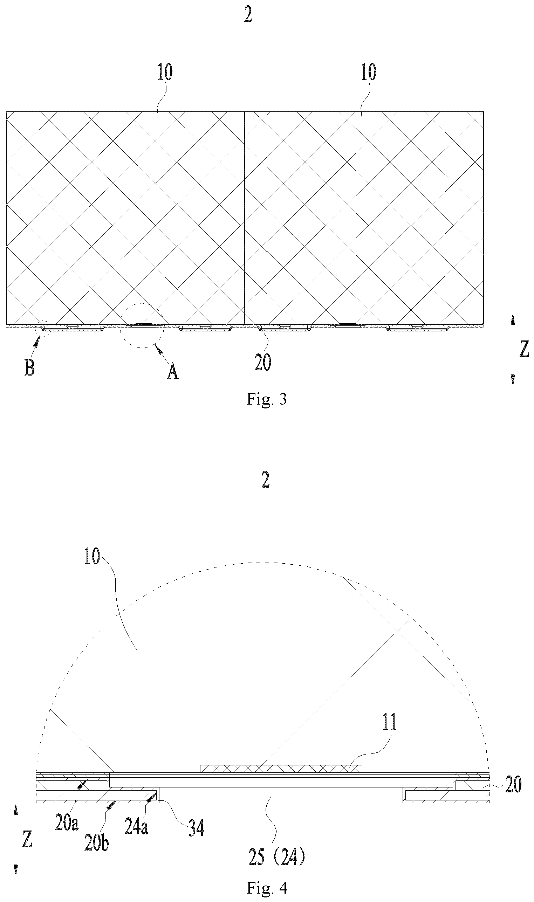

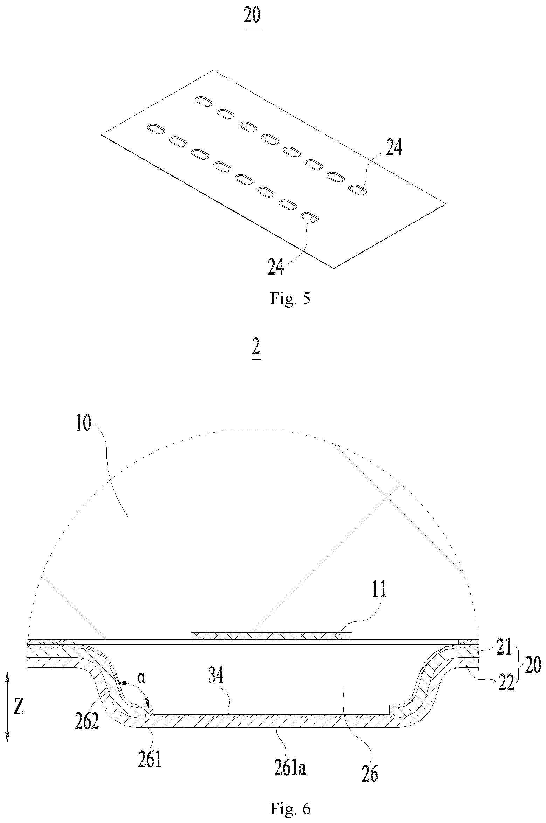

Fig. 2 shows an exploded structural schematic of a battery according to some embodiments of the present application; Fig. 3 shows a cross-sectional schematic view of a battery according to some embodiments of the present application; Fig. 4 shows an enlarged schematic view of the battery at circle frame A of Fig. 3; and Fig. 5 shows a structural schematic view of a functional part of a battery according to some embodiments of the present application

As shown in Fig. 2 to Fig. 5, a battery 2 in the embodiments of the present application includes a battery cell 10, a functional part 20 and an insulating layer 34. The battery cell 10 is provided with a pressure-relieving mechanism 11. The functional part 20 is connected to the battery cell 10 and provided with an avoidance structure 25, which is used to avoid materials released by the battery cell 10 through the pressure-relieving mechanism 11. At least a portion of the insulating layer 34 is provided within a region of the functional part 20 corresponding to the avoidance structure 25.

There may be one or more battery cells 10. Exemplarily, there are a plurality of battery cells 10, and the plurality of battery cells 10 may be connected in series, in parallel or in hybrid. The hybrid connection means that the plurality of battery cells 10 are connected in series and parallel in combination.

The functional part 20 is a part of the battery 2 for realizing a specific function. The functional part 20 may be a heat-managing part for adjusting the temperature of the battery cell 10, a support part for supporting the battery cell 10, a circuit board assembly for controlling the electrical charge and discharge of the battery cell 10, or a part used to perform other functions. Exemplarily, the support part can generally be understood as a part for providing the support for the battery cell 10 or resisting the gravity of the battery cell 10, and the support part can be attached to a lower side of the battery cell 10 and support or fix the battery cell 10 thereon. The heat-managing part may be a part for accommodating a heat-exchanging medium to adjust the temperature of the battery cell 10, the heat-exchanging medium may be liquid or gas, and adjusting temperature refers to heating or cooling the battery cell 10. Optionally, the heat-exchanging medium may be water, mixture liquid of water and ethylene glycol, air or the like.

In this embodiment, the type and quantity of the functional part 20 are not limited.

The avoidance structure 25 may include a structure such as a hole, a groove and a notch, which can provide space for the actuation of the pressure-relieving mechanism 11, reduce the risk of the pressure-relieving mechanism 11 being blocked by the functional part 20 during actuation, and enable the pressure-relieving mechanism 11 to start normally. Exemplarily, the avoidance structure 25 can also avoid at least portion of the high-temperature and high-pressure materials released by the battery cell 10, and provide a passage for releasing the high-temperature and high-pressure materials.

The insulating layer 34 can be entirely arranged within the region of the functional part 20 corresponding to the avoidance structure 25, or merely partially arranged within the region of the functional part 20 corresponding to the avoidance structure 25.

The region of the functional part 20 corresponding to the avoidance structure 25 may refer to a boundary face on the functional part 20 where the avoidance structure 25 is formed, and the boundary face may include one or more of a plane face, a curved face and a bent face. Exemplarily, in the case that the avoidance structure 25 is a concave groove, the region of the avoidance structure 25 corresponding to the functional part 20 may be a side wall face and a bottom wall face of the concave groove; or in the case that the avoidance structure 25 is a through hole, the region of the avoidance structure 25 corresponding to the functional part 20 may be a hole wall face of the through hole; in the case that the through hole is a structure with a uniform aperture size, the region may be a curved face surrounding and forming the through hole. Optionally, the form of the avoidance structure 25 is not limited to the structure of the concave groove or the through hole in the above examples, as long as the region for avoiding at least a portion of the pressure-relieving mechanism 11 is formed for its actuation and pressure relief. Based on this, the region of the functional part 20 corresponding to the avoidance structure 25 is not limited to the structure in the above examples.

The arrangement that the insulating layer 34 is arranged within the region of the functional part 20 corresponding to the avoidance structure 25 means that the insulating layer 34 is arranged on a face of the functional part 20 for enclosing and forming the avoidance structure 25.

In the embodiment of the present application, the avoidance structure 25 can avoid at least a portion of the materials released by the battery cell 10 via the pressure-relieving mechanism 11, so as to reduce the risk of the functional part 20 blocking the released materials and improve the safety. The insulating layer 34 can insulate and isolate the region of the functional part 20 corresponding to the avoidance structure 25 from the battery cell 10, increase a creepage distance and an insulation gap between the functional part 20 and the battery cell 10, reduce the risk of the electrical discharge between the functional part 20 and the battery cell 10, and improve the safety. The insulating layer 34 can separate a portion of the materials released by the battery cell 10 from the functional part 20, so as to reduce the risk that the functional part 20 may be conducted with the battery cell 10 through the materials released by the battery cell 10 and improve the safety.

In some embodiments, the battery 2 further includes a housing 40, and the battery cell 10 and the functional part 20 are accommodated in the housing 40. The housing 40 can be in various shapes, such as cylinder or cuboid.

In some embodiments, the housing 40 is provided with an opening, and the battery 2 further includes a cover plate 50. The cover plate 50 can be used to cover the opening of the housing 40, so that the cover plate 50 and the housing 40 can jointly define an accommodating space for accommodating the battery cell 10 and functional part 20.

In some embodiments, two ends of the housing 40 are provided with openings, and two cover plates 50 are provided to cover two openings of the housing 40 respectively. Exemplarily, the cover plate 50 covering the opening on a top of the housing 40 may be called an upper cover, and the cover plate 50 covering the opening on a bottom of the housing 40 may be called a bottom plate.

In some embodiments, the functional part 20 includes a first plate 21 and a second plate 22 stacked with each other, and a flow passage 23 is formed between the first plate 21 and the second plate 22. The heat-exchanging medium may flow in the flow passage 23 to exchange heat with the battery cell 10 through the first plate 21 or the second plate 22.

Exemplarily, both of the first plate 21 and the second plate 22 are plate-like structures, and the first plate 21 and the second plate 22 can be connected by means of welding, bonding or other connection methods.

In some embodiments, the second plate 22 is located on a side of the first plate 21 facing away from the battery cells 10. The first plate 21 is a flat plate structure, a surface of the second plate 22 facing the first plate 21 is provided with a concave part, and the first plate 21 covers the concave part of the second plate 22. By providing a concave part on the second plate 22, the flow passage 23 is formed between the first plate 21 and the second plate 22.

In some embodiments, both of the first plate 21 and the second plate 22 may be metal plates.

In some embodiments, the avoidance structure 25 includes a through hole 24 opposite to the pressure-relieving mechanism 11, and the insulating layer 34 covers a hole wall face 24a of the through hole 24.

The through hole 24 may be equal-aperture hole or variable-aperture hole, and the variable-aperture hole may be a stepped hole, a trapezoidal hole or other holes.

The arrangement that the through hole 24 is opposite to the pressure-relieving mechanism 11 means that the through hole 24 at least partially overlaps with the pressure-relieving mechanism 11 in an axial direction of the through hole 24 .

The materials released by the pressure-relieving mechanism 11 can pass through the through hole 24 to reduce the risk of the functional part 20 blocking the released materials, so that the internal pressure of the battery cell 10 can be quickly released to reduce the safety risk. The insulating layer 34 can cover the hole wall face 24a of the through hole 24 to increase the creepage distance between the hole wall face 24a and the battery cell 10, reduce the risk of electrical discharge of the battery cell 10, and improve the safety.

In some embodiments, the axial direction of the through hole 24 is parallel to a thickness direction Z of the functional part 20.

In some embodiments, a relieving passage is formed when the pressure-relieving mechanism 11 is actuated. In the thickness direction Z, a projection of the relieving passage is located within a projection of the through hole 24.

In some embodiments, the functional part 20 includes a first surface 20a facing the battery cell 10 and a second surface 20b facing away from the battery cell 10, and the through hole 24 extends from the first surface 20a to the second surface 20b. A portion of the insulating layer 34 is provided on the first surface 20a.

Openings at two ends of the through hole 24 are formed on the first surface 20a and the second surface 20b respectively.

The insulating layer 34 can cover at least a portion of the first surface 20a to increase the creepage distance between the functional part 20 and the battery cell 10, reduce the risk of the electrical discharge the battery cell 10, and improve the safety. When a portion of the materials released by the battery cell 10 gather between the first surface 20a and the battery cell 10, the insulating layer 34 can separate a portion of the materials released by the battery cell 10 from the first surface 20a, so as to reduce the risk that the functional part may be conducted with the battery cell through the materials released by the battery cell and improve the safety.

In some embodiments, both of the first surface 20a and the second surface 20b are plane faces and perpendicular to the thickness direction Z.

In some embodiments, a portion of the insulating layer 34 is arranged on the second surface 20b.

In some embodiments, the battery cell 10 is arranged on a side of the functional part 20 in the thickness direction Z of the functional part 20.

Exemplarily, there are the plurality of battery cells 10. The plurality of battery cells 10 may be arranged on the same side of the functional part 20 in the thickness direction Z. Alternatively, a portion of the battery cells 10 are arranged on a side of the functional part 20 in the thickness direction Z, and the other portion of the battery cells 10 are arranged on the other side of the functional part 20 in the thickness direction Z.

In some embodiments, the functional part 20 is provided with a plurality of avoidance structures 25, and the plurality of avoidance structures 25 are provided in one-to-one correspondence with the plurality of battery cells 10. Exemplarily, the through holes 24 of the plurality of avoidance structures 25 are opposite to the pressure-relieving mechanisms 11 of the plurality of battery cells 10 respectively.

In some embodiments, an gas-exhausting chamber is formed between the functional part 20 and the bottom plate, and the plurality of battery cells 10 are located on a side of the functional part 20 away from the gas-exhausting chamber. When the battery cell 10 is out of control in heat and release the high-temperature and high-pressure materials, the high-temperature and high-pressure materials passing through the corresponding through holes 24 enter into the gas-exhausting chamber, and then are discharged via the pressure-relieving valve on the bottom plate. The functional part 20 can separate a portion of the high-temperature and high-pressure materials from other normal battery cells 10 to reduce the risk of other battery cells 10 out of control in heat.

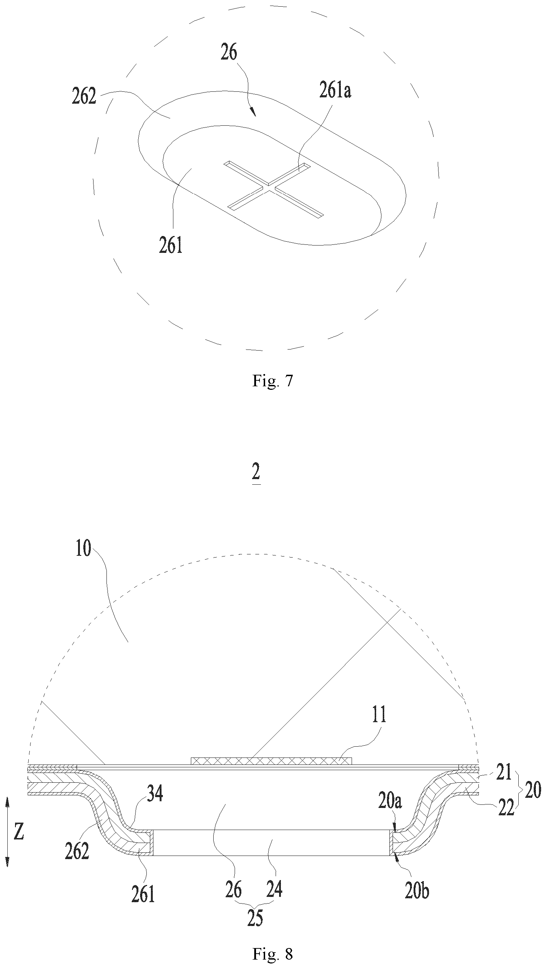

Fig. 6 shows a partial cross-sectional schematic view of a battery according to some other embodiments of the present application; Fig. 7 shows a partial schematic view of a functional part of a battery according to some other embodiments of the present application.

As shown in Fig. 6 and Fig. 7, in some embodiments, the avoidance structure 25 includes an avoidance concave part 26, the avoidance concave part 26 is arranged on a side of the functional part 20 facing the battery cell 10, a bottom wall 261 of the avoidance concave part is opposite to the pressure-relieving mechanism 11, and the bottom wall 261 of the avoidance concave part is provided with a weak region 261a. The insulating layer 34 is at least arranged on a side wall 262 of the avoidance concave part.

The weak region 261a is a relatively weak portion of the functional part 20, which is a portion of the functional part 20 that is easily broken, crushed, torn or opened. Exemplarily, the strength of the weak region 261a is weaker than the strength of a portion of the functional part 20 near the weak region 261a.

In some examples of the present application, a predetermined region of the bottom wall 261 of the avoidance concave part may be provided with a concave groove, a notch, a hole or other structures to reduce the local strength of the bottom wall 261 of the avoidance concave part, and the weak region 261a can be formed on the bottom wall 261 of the avoidance concave part. For example, the predetermined region of the bottom wall 261 of the avoidance concave part may be processed by a thinning treatment, and a thinned portion of the bottom wall 261 of the avoidance concave part forms as the weak region 261a. In some other examples, the predetermined region of the bottom wall 261 of the avoidance concave part may be processed by a material treatment, so that the strength of this predetermined region is weaker than the strength of other region, in other words, this predetermined region is the weak region 261a.

When the high-temperature and high-pressure materials is released by the battery cell 10 through the pressure-relieving mechanism 11, the weak region 261a is broken under the impact of the high-temperature and high-pressure materials, so as to form a passage on the bottom wall 261 of the avoidance concave part through which the high-temperature and high-pressure materials pass, thereby reducing the risk of the functional part 20 blocking the high-temperature and high-pressure materials and improving the safety. In the present application, by arranging the avoidance concave part 26, a distance between the battery cell 10 and the side wall 262 of the avoidance concave part and a distance between the battery cell 10 and the bottom wall 261 of the avoidance concave part can increase; the insulating layer 34 can insulate and isolate the side wall 262 of the avoidance concave part from the battery cell 10, increase the creepage distance and the insulating gap between functional part 20 and the battery cell 10, reduce the risk of the electrical discharge of the battery cell 10, and improve the safety.

In some embodiments, the avoidance concave part 26 can also provide a space for the actuation of the pressure-relieving mechanism 11, thereby reducing the risk of the functional part 20 interfering with the pressure-relieving mechanism 11.

In some embodiments, the bottom wall 261 of the avoidance concave part is provided with the concave groove, and a portion of the bottom wall 261 of the avoidance concave part corresponding to the concave groove forms the weak region 261a.

In some embodiments, the weak region 261a may be annular, cross-shaped, U-shaped or the like.

In some embodiments, the insulating layer 34 is also arranged on the bottom wall 261 of the avoidance concave part.

The insulating layer 34 can insulate and isolate the bottom wall 261 of the avoidance concave part from the battery cell 10, increase the creepage distance and the insulating gap between the bottom wall 261 of the avoidance concave part and the battery cell 10, reduce the risk of the electrical discharge of the battery cell 10, and improve the safety.

In some embodiments, the insulating layer 34 can be formed by spraying the insulating paint on a surface of the functional part 20.

In some embodiments, an angle $\alpha$ between the side wall 262 of the avoidance concave part and the bottom wall 261 of the avoidance concave part is an obtuse angle. Optionally, $\alpha$ is 105°-175°. Optionally, $\alpha$ is 120°-150°.

When an external device sprays the insulating paint in a direction perpendicular to the bottom wall 261 of the avoidance concave part, the insulating paint can better adhere to the side wall 262 of the avoidance concave part.

Fig. 8 shows a partial cross-sectional schematic view of a battery according to some other embodiments of the present application.

As shown in Fig. 8, the avoidance structure 25 includes an avoidance concave part 26 and a through hole 24, and the through hole 24 penetrates through the bottom wall 261 of the avoidance concave part. The bottom wall 261 of the avoidance concave part includes a first surface 20a and a second surface 20b opposite to each other, and the through hole 24 extends from the first surface 20a to the second surface 20b.

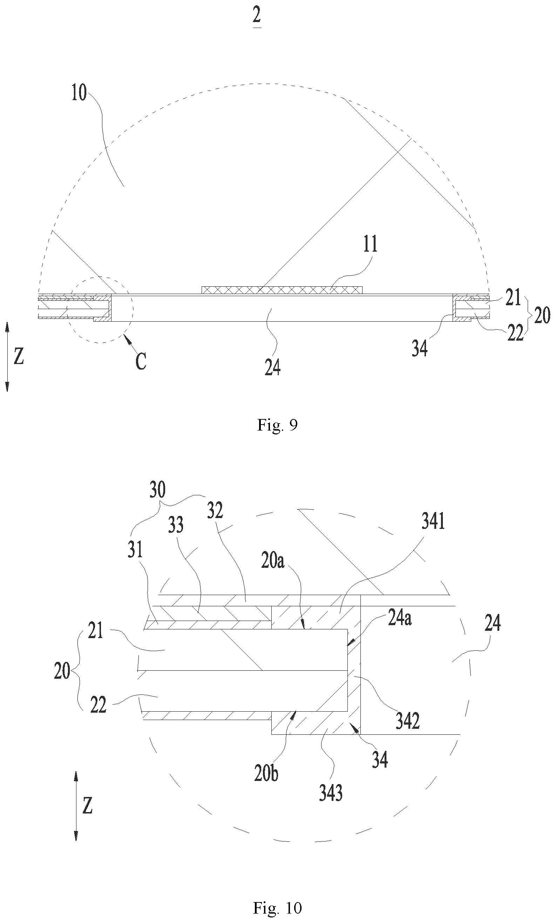

Fig. 9 shows a partial cross-sectional schematic view of a battery according to some other embodiments of the present application; Fig. 10 shows an enlarged schematic view of a portion at circular frame C of Fig. 9.

As shown in Fig. 9 and Fig. 10, in some embodiments, the insulating layer 34 includes a first portion 341, a second portion 342 and a third portion 343, the second portion 342 is arranged on the hole wall face 24a of the through hole 24, and the first portion 341 is arranged on the first surface 20a, and the third portion 343 is arranged on the second surface 20b.

The insulating layer 34 covers a region of the functional part 20 surrounding the through hole 24 to completely cover the hole wall face 24a of the through hole 24, thereby reducing the risk of the electrical discharge of the battery cell 10 to the hole wall face 24a. The first portion 341 can separate a portion of the materials released by the battery cell 10 from the functional part 20, so as to reduce the risk that the functional part 20 may be conducted with the battery cell 10 through the materials released by the battery cell 10 and improve the safety. By arranging the first portion 341 and the third portion 343 of the insulating layer 34, the connecting area between the insulating layer 34 and the functional part 20 can increase, and the risk of the insulating layer 34 falling off can be reduced.

In some embodiments, the insulating layer 34 can be an insulating tape bonded on the functional part 20. Exemplarily, the material of the insulating layer 34 may be Teflon.

In some embodiments, a portion of the insulating layer 34 inserted into the through hole 24 is interference-fitted with the through hole 24 to be engaged with the functional part 20.

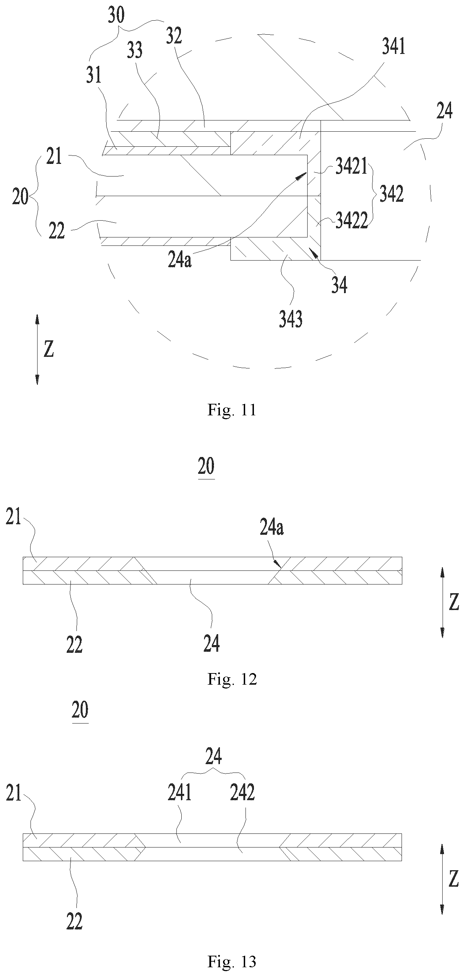

Fig. 11 shows a partial cross-sectional schematic view of a battery according to some other embodiments of the present application.

As shown in Fig. 11, in some embodiments, the second portion 342 includes a first sub-portion 3421 and a second sub-portion 3422, and the first sub-portion 3421 and the second sub-portion 3422 contact with each other and jointly cover the hole wall face 24a of the through hole 24. The first sub-portion 3421 and the first portion 341 are integrally formed, and the second sub-portion 3422 and the third portion 343 are integrally formed.

The insulating layer 34 can be formed by two insulating sheets engaged by interlocking with each other. One of the insulating sheets includes the first portion 341 and the first sub-portion 3421, and the other of the insulating sheets includes the second sub-portion 3422 and the third portion 343.

The first sub-portion 3421 of one of the insulating sheets is inserted into the through hole 24 from one side and interference-fitted with the through hole 24, so as to realize the engagement between the insulating sheet and the functional part 20. The second sub-portion 3422 of the other one of the insulating sheets is inserted into the through hole 24 from the other side and interference-fitted with the through hole 24, so as to realize the engagement between the insulating sheet and the functional part 20. The first sub-portion 3421 is in contact with the second sub-portion 3422 to completely cover the hole wall face 24a.

In some embodiments, the first sub-portion 3421 and the second sub-portion 3422 may abut against each other in the axial direction of the through hole 24.

In some embodiments, the first sub-portion 3421 can be inserted between the second sub-portion 3422 and the hole wall face 24a of the through hole 24, and the first sub-portion 3421 and the second sub-portion 3422 form a double-layer protection structure.

Fig. 12 shows a partial cross-sectional schematic view of a functional part of a battery according to some other embodiments of the present application.

As shown in Fig. 12, in some embodiments, the aperture of the through hole 24 increases or decreases gradually in a direction away from the battery cell 10.

The aperture refers to a diameter of a cross section of the through hole 24 perpendicular to the axial direction of the through hole 24. As to a non-circular cross-section, the aperture refers to a diameter of a circumscribed circle of the cross-section.

The through hole 24 in this embodiment may be a variable-aperture hole, so that the hole wall face 24a can be inclined relative to the axial direction. When the external device sprays the insulating paint in the axial direction, the insulating paint can better adhere to the hole wall face 24a.

Fig. 13 shows a partial cross-sectional schematic view of a functional part of a battery according to some other embodiments of the present application.

As shown in Fig. 13, in some embodiments, the through hole 24 includes a first hole segment 241 and a second hole segment 242, the second hole segment 242 communicates with the first hole segment 241 and is located on a side of the first hole segment 241 away from the battery cell 10. The aperture of the first hole segment 241 gradually increases in a direction away from the second hole segment 242, and the aperture of the second hole segment 242 gradually increases in a direction away from the first hole segment 241.

The through hole 24 in this embodiment varies in diameter, so that the hole wall face 24a can be inclined relative to the axial direction. When the external device sprays the insulating paint in the axial direction, the insulating paint can better adhere to the hole wall face 24a.

In some embodiments, the first hole segment 241 is formed in the first plate 21, and the second hole segment 242 is formed in the second plate 22.

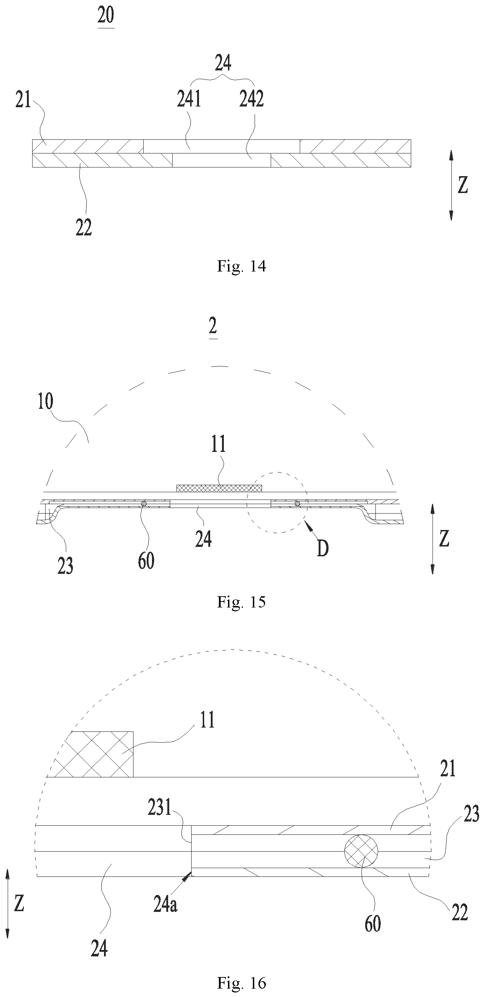

Fig. 14 shows a partial cross-sectional schematic view of a functional part of a battery according to some other embodiments of the present application.

As shown in Fig. 14, in some embodiments, the through hole 24 may be a stepped hole including a first hole segment 241 close to the battery cell 10 and a second hole segment 242 away from the battery cell 10. The aperture of the first hole segment 241 may be larger or smaller than the aperture of the second hole segment 242.

Exemplarily, the first hole segment 241 may be an equal-aperture hole, and the second hole segment 242 may be an equal-aperture hole.

The through hole 24 in this embodiment is the stepped hole. When the external device sprays the insulating paint in the axial direction, the insulating paint can adhere to a step of the hole wall face 24a, so as to improve the insulation of the hole wall face 24a and reduce the safety risk.

Fig. 15 shows a partial cross-sectional schematic view of a battery according to some other embodiments of the present application; Fig. 16 shows an enlarged schematic view at circular frame D of Fig. 15.

As shown in Fig. 15 and Fig. 16, in some embodiments, a flow passage 23 for accommodating the heat-exchanging medium is formed inside the functional part 20. The battery 2 further includes a partition structure 60, the partition structure 60 can separate the avoidance structure 25 from the flow passage 23, and the partition structure 60 is configured to be activated when the battery cell 10 releases the materials via the pressure-relieving mechanism 11, so that the avoidance structure 25 can communicate with the flow passage 23.

When the heat-exchanging medium flows through the flow passage 23, the battery cell 10 exchanges heat with the functional part 20 to adjust the temperature of the battery cell 10. When the temperature of the battery cell 10 is too high, the heat-exchanging medium can cool the battery cell 10 to reduce the temperature of the battery cell 10. When the temperature of the battery cell 10 is too low, the heat-exchanging medium can heat the battery cell 10 to increase the temperature of the battery cell 10. Alternatively, the heat-exchanging medium may be liquid or gas.

When the battery cell 10 works normally, the partition structure 60 can separate the avoidance structure 25 from the flow passage 23 to reduce the risk of leakage of the heat-exchanging medium. When the battery cell 10 is out of control in heat, the high-temperature and high-pressure materials inside the battery cell 10 is released from the pressure-relieving mechanism 11 and passes through the avoidance structure 25, and the separating function of the partition structure 60 fails. The heat-exchanging medium can enter the avoidance structure 25 and cool the high-temperature and high-pressure materials passing through the avoidance structure 25 to reduce the safety risk.

Exemplarily, the avoidance structure 25 includes a through hole 24, and the partition structure 60 can separate the through hole 24 from the flow passage 23.

In some embodiments, the flow passage 23 is provided with a first opening 231 communicating with the avoidance structure 25, and the blocking structure 60 is used to close the first opening 231 to separate the avoidance structure 25 from the flow passage 23.

The partition structure 60 can cover the first opening 231 from an outer side of the flow passage 23, and can also cover the first opening 231 from the inside of the flow passage 23. Exemplarily, the partition structure 60 is located in the flow passage 23 and closes the first opening 231.

By forming the first opening 231, the heat-exchanging medium can be directly sprayed on the high-temperature and high-pressure materials passing through the avoidance structure 25, so as to reduce the temperature in time and reduce the safety risk.

In some embodiments, the first opening 231 is formed on the hole wall face 24 a of the through hole 24.

In some embodiments, a melting point of the partition structure 60 is lower than a melting point of the functional part 20, and the partition structure 60 is configured to melt when the battery cell 10 releases the materials through the pressure-relieving mechanism 11.

When the high-temperature and high-pressure materials released by the pressure-relieving mechanism 11 passes through the avoidance structure 25, the temperature of the region near the avoidance structure 25 of the functional part 20 increase, thereby melting the partition structure 60. The melt partition structure 60 could hardly block the heat-exchanging medium, and the heat-exchanging medium can flow out of the flow channel 23 and be ejected into the avoidance structure 25.

In some embodiments, the material of the partition structure 60 may be plastic, metal or other materials. Exemplarily, the partition structure 60 may be made of a metal with a melting point lower than 300° or an alloy thereof.

In some embodiments, the functional part 20 includes a first plate 21 and a second plate 22 stacked with each other, and the flow passage 23 is formed between the first plate 21 and the second plate 22. The avoidance structure 25 includes the through hole 24 penetrating through the first plate 21 and the second plate 22.

In some embodiments, the partition structure 60 is located between the first plate 21 and the second plate 22.

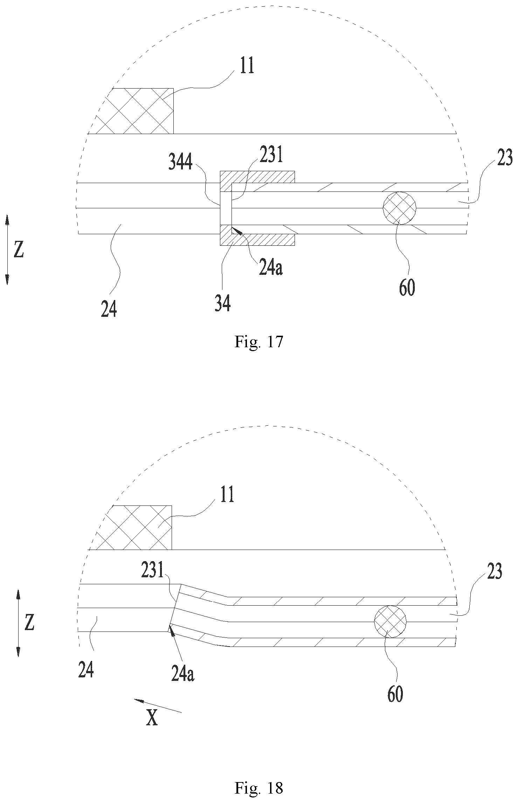

Fig. 17 shows a partial cross-sectional schematic view of a battery according to some other embodiments of the present application.

As shown in Fig. 17, in some embodiments, the insulating layer 34 is provided with a second opening 344 opposite to the first opening 231.

The insulating layer 34 is provided with the second opening 344 to avoid the heat-exchanging medium when the heat-exchanging medium is ejected out via the first opening 231, so that the heat-exchanging medium can quickly act on the high-temperature and high-pressure materials released by the battery cell 10.

In some embodiments, the portion of the insulating layer 34 arranged on the hole wall face 24a of the through hole 24 is provided with the second opening 344.

Fig. 18 shows a partial cross-sectional schematic view of a battery according to some other embodiments of the present application.

As shown in Fig. 18, in some embodiments, in an axial direction X of the first opening 231, the first opening 231 is opposite to the pressure-relieving mechanism 11.

The arrangement that the first opening 231 is opposite to the pressure-relieving mechanism 11 in the axial direction X means that a projection of the first opening 231 in the axial direction X at least partially overlaps with a projection of the pressure-relieving mechanism 11 in the axial direction X. Exemplarily, a portion of the functional part 20 close to the through hole 24 can be bent, so that a certain angle can be formed between the axial direction X of the first opening 231 and a thickness direction of the pressure-relieving mechanism 11, and the first opening 231 can be opposite to the pressing mechanism 11 in the axial direction X.

When the partition structure 60 is actuated, the heat-exchanging medium is ejected out through the first opening 231, and the ejected heat-exchanging medium can be aimed at the pressure-relieving mechanism 11, so that the heat-exchanging medium can be ejected into an interior of the battery cell 10, so as to decrease the temperature of the battery cell 10, slow down the reaction inside the battery cell 10 and reduce the safety risk.

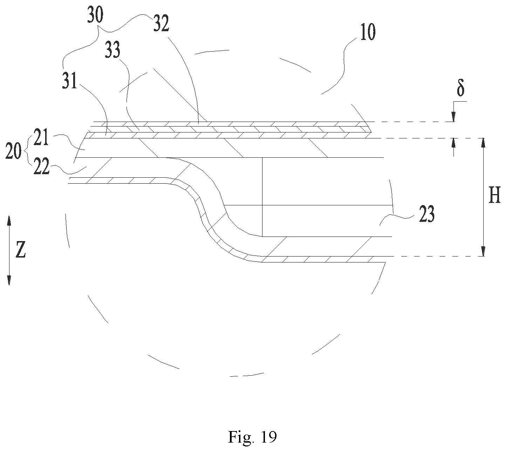

Fig. 19 shows an enlarged schematic view at circular frame B of Fig. 3.

As shown in Fig. 19, in some embodiments, the battery 2 further includes an insulating part 30, at least a portion of the insulating part 30 is located between the battery cell 10 and the functional part 20.

The insulating part 30 may be entirely located between the battery cell 10 and the functional part 20, or may be merely partially located between the battery cell 10 and the functional part 20.

The insulating part 30 may be of an integral structure or of a split structure. Exemplarily, the insulating part 30 includes a plurality of insulating structures provided separately.

At least a portion of the insulating part 30 is located between the battery cell 10 and the functional part 20, so as to insulate and isolate the functional part 20 from the battery cell 10, increase the creepage distance and the insulating gap between the functional part 20 and the battery cell 10, reduce the risk of the electrical discharge between the functional part 20 and the battery cell 10, and improve the safety.

In some embodiments, the battery cell 10 is arranged on a side of the functional part 20 in a thickness direction Z of the functional part 20. In the thickness direction Z, the minimum thickness of a portion of the insulating part 30 between the battery cell 10 and the functional part 20 is $\delta$, and a maximum thickness of the functional part 20 is H. $\delta$ and H satisfy: $0.001 \leq \delta/H \leq 100$.

H is the maximum size of the functional part 20 in the thickness direction Z. $\delta$ is the minimum size in the thickness direction Z of the portion of the insulating part 30 located between the battery cell 10 and the functional part 20.

The larger the value of $\delta$ is, the larger the insulating gap between the battery cell 10 and the functional part 20 is, and the lower the risk of the electrical discharge between the battery cell 10 and the functional part 20 is. The larger the value of $\delta$ is, the larger a heat-exchanging distance between the battery cell 10 and the functional part 20 is, and the lower the heat-exchanging efficiency between the battery cell 10 and the functional part 20 is. Conversely, the smaller the value of $\delta$ is, the smaller the insulating gap between the battery cell 10 and the functional part 20 is, and the higher the heat-exchanging efficiency between the battery cell 10 and the functional part 20 is.

The smaller the value of H is, the lower the mechanical strength of the functional part 20 is, and the higher the risk that the battery 2 is broken is when the battery 2 is subjected to the external impact. The smaller the value of H is, the smaller the space occupied by the functional part 20 is, and the higher the energy density of the battery 2 is. Conversely, the larger the value of H is, the higher the mechanical strength of the functional part 20 is, but the larger the wall thickness of the functional part 20 is, and the larger the heat-exchanging distance between the functional part 20 and the battery cell 10 is.

In view of this, after experiments, the inventors limit the value of $\delta/H$ to 0.001-100 to balance the safety and heat-exchanging efficiency of the battery 2. When $\delta/H > 100$, if the thickness of the insulating part 30 is too large, the distance between the battery cell 10 and the functional part 20 is too large, the heat-exchanging efficiency will be low, and the temperature-controlling effect of the functional part 20 to the battery cell 10 will not satisfy the requirements; if the thickness of the functional part 20 is too small, the mechanical strength of the functional part 20 will not satisfy the system safety requirements. When $\delta/H < 0.001$, if the thickness of the insulating part 30 is too small, the insulating gap in the insulating design will not satisfy the requirements; if the thickness of the functional part 20 is too large, the heat-exchanging efficiency is too low, the temperature-controlling effect of the functional part 20 to the battery cell 10 will not satisfy the requirements.

Optionally, the value of $\delta/H$ is 0.001, 0.005, 0.01, 0.05, 0.2, 1, 5, 10, 20, 50, 80 or 100.

In some embodiments, the value of H is 0.1mm-100mm. Optionally, the value of H is 0.1mm, 0.5mm, 1mm, 2mm, 5mm, 7mm, 9mm, 10mm, 30mm, 50mm or 100mm.

In some embodiments, the value of $\delta$ is 0.1mm-10mm. Optionally, the value of $\delta$ is 0.1 mm, 0.2 mm, 0.5 mm, 1 mm, 2 mm, 5 mm, 7 mm, 9 mm or 10 mm.

In some embodiments, the insulating part 30 includes a first insulating part 31, a second insulating part 32 and an insulating adhesive layer 33 stacked with one another in the thickness direction Z, the first insulating part 31 is attached to the functional part 20, the second insulating part 32 is attached to the battery cell 10, and the insulating adhesive layer 33 is bonded between the first insulating part 31 and the second insulating part 32.

The first insulating part 31 and the second insulating part 32 can function as the double-layer insulating protection, so as to improve the insulating effect between the functional part 20 and the battery cell 10. The insulating adhesive layer 33 can not only realize the connection between the functional part 20 and the battery cell 10, but also improve the insulation between the functional part 20 and the battery cell 10.

In some embodiments, the battery cell 10 includes a metal shell, and the second insulating part 32 is bonded to the metal shell.

In some embodiments, the first insulating part 31 is applied on the surface of the functional part 20. Optionally, the first insulating part 31 is applied on the surface of the functional part 20 by means of a spraying process. Optionally, the first insulating part 31 is the insulating paint applied on the surface of the functional part 20.

In some embodiments, the metal shell of the battery cell 10 is covered with an insulating film, and the second insulating part 32 is a portion of the insulating film between the metal shell and the functional part 20. Exemplarily, the insulating film is a blue film.

Exemplarily, the value of $\delta$ is the sum of the thickness of the first insulating part 31, the thickness of the second insulating part 32 and the thickness of the insulating adhesive layer 33.

In some embodiments, the insulating layer 34 is connected to the first insulating part 31. The first insulating part 31 is connected to the insulating layer 34 to reduce an exposed region of the functional part 20, increase the creepage distance between the functional part 20 and the battery cell 10, reduce the risk of the electrical discharge of the battery cell 10, and improve the safety.

In some embodiments, the first insulating part 31 and the insulating layer 34 are integrally formed. Exemplarily, the first insulating part 31 and the insulating layer 34 can be formed by spraying the insulating paint on the surface of the functional part 20.

According to some embodiments of the present application, the present application also provides an electricity-consuming device including the battery in any one of the above embodiments, and the battery is used to supply the electric power to the electricity-consuming device. The electricity-consuming device may be any one of the devices or systems applying the battery as described above.

According to some embodiments of the present application, referring to Fig. 2 to Fig. 5, the present application provides the battery 2 including the battery cell 10, the functional part 20 and the insulating layer 34. The battery cell 10 is provided with the pressure-relieving mechanism 11. The functional part 20 is connected to the battery cell 10. The flow passage 23 for accommodating the heat-exchanging medium is provided in the functional part 20. When the heat-exchanging medium flows through the flow passage 23, the battery cell 10 exchanges heat with the functional part 20 to adjust the temperature of the battery cell 10.

The functional part 20 is provided with the through hole 24 for avoiding the materials released by the battery cell 10 via the pressure-relieving mechanism 11. At least a portion of the insulating layer 34 is arranged on the hole wall face 24a of the through hole 24.

Although the present application has been described with reference to the preferred embodiments, various modifications may be made thereto and equivalents may be substituted for parts thereof without departing from the scope of the present application. In particular, as long as there are no structural conflicts, the technical features mentioned in each of the embodiments can be combined in any way. The present application is not limited to the specific embodiments disclosed herein, but includes all technical solutions falling within the scope of the claims.

**Claims**

1. A battery, comprising

    a battery cell, provided with a pressure-relieving mechanism;
    a functional part, connected to the battery cell and provided with an avoidance structure which is configured to avoid materials released by the battery cell through the pressure-relieving mechanism; and
    an insulating layer, at least a portion of the insulating layer arranged within a region of the functional part corresponding to the avoidance structure.

2. The battery according to claim 1, wherein the avoidance structure comprises an avoidance concave part arranged on a side of the functional part facing the battery cell, a bottom wall of the avoidance concave part is opposite to the pressure-relieving mechanism, and the bottom wall of the avoidance concave part is provided with a weak region;
the insulating layer is at least arranged on a side wall of the avoidance concave part.

3. The battery according to claim 2, wherein the insulating layer is further arranged on the bottom wall of the avoidance concave part.

4. The battery according to claim 2 or 3, wherein an angle between the side wall of the avoidance concave part and the bottom wall of the avoidance concave part is an obtuse angle.

5. The battery according to any one of claims 1-4, wherein the avoidance structure comprises a through hole opposite to the pressure-relieving mechanism, and the insulating layer covers a hole wall face of the through hole.

6. The battery according to claim 5, wherein the functional part comprises a first surface facing the battery cell and a second surface facing away from the battery cell, and the through hole extends from the first surface to the second surface;
a portion of the insulating layer is arranged on the first surface.

7. The battery according to claim 6, wherein the insulating layer comprises a first portion, a second portion and a third portion, the second portion is arranged on the hole wall face of the through hole, the first portion is arranged on the first surface, and the third portion is arranged on the second surface.

8. The battery according to claim 7, wherein
the second portion comprises a first sub-portion and a second sub-portion, the first sub-portion and the second sub-portion contact with each other and jointly cover the hole wall face of the through hole, the first sub-portion and the first portion are integrally formed, and the second sub-portion and the third portion are integrally formed.

9. The battery according to any one of claims 5-8, wherein an aperture of the through hole gradually increases or decreases in a direction away from the battery cell.

10. The battery according to any one of claims 5-8, wherein the through hole comprises a first hole segment and a second hole segment, and the second hole segment is communicated with the first hole segment and located on a side of the first hole segment away from the battery cell;
an aperture of the first hole segment gradually increases in a direction away from the second hole segment, and an aperture of the second hole segment gradually increases in a direction away from the first hole segment.

11. The battery according to any one of claims 5-8, wherein the through hole is a stepped hole comprising a first hole segment close to the battery cell and a second hole segment away from the battery cell, and an aperture of the first hole segment is larger than or smaller than an aperture of the second hole segment.

12. The battery according to any one of claims 1-11, wherein a flow passage for accommodating a heat-exchanging medium is provided in the functional part;
the battery further comprises a partition structure separating the avoidance structure from the flow passage, and the partition structure is configured to activate when the battery cell releases the materials through the pressure-relieving mechanism to communicate the avoidance structure with the flow passage.

13. The battery according to claim 12, wherein the flow passage is provided with a first opening communicated with the avoidance structure, and the partition structure is configured to close the first opening to separate the avoidance structure from the flow passage.

14. The battery according to claim 13, wherein the first opening is opposite to the pressure-relieving mechanism in an axial direction of the first opening.

15. The battery according to claim 13 or 14, wherein the insulating layer is provided with a second opening opposite to the first opening.

16. The battery according to any one of claims 12-15, wherein a melting point of the partition structure is lower than a melting point of the functional part, and the partition structure is configured to melt when the battery cell releases the materials through the pressure-relieving mechanism.

17. The battery according to claim 16, wherein a material of the partition structure is plastic or metal.

18. The battery according to any one of claims 12-17, wherein the functional part comprises a first plate and a second plate which are stacked with each other, the flow passage is formed between the first plate and the second plate, and the avoidance structure comprises a through hole penetrating through the first plate and the second plate.

19. The battery according to any one of claims 1-18, further comprising an insulating part, wherein at least a portion of the insulating part is located between the battery cell and the functional part.

20. The battery according to claim 19, wherein

the battery cell is arranged on a side of the functional part in a thickness direction of the functional part;
in the thickness direction, a minimum thickness of a portion of the insulating part located between the battery cell and the functional part is $\delta$, a maximum thickness of the functional part is H, $\delta$ and H satisfy:

$$0.001 \leq \delta/H \leq 100.$$

21. The battery according to claim 20, wherein a value of H is in a range of 0.1mm-100mm, a value of $\delta$ is in a range of 0.1mm-10mm.

22. The battery according to claim 20 or 21, wherein the insulating part comprises a first insulating part, a second insulating part and an insulating adhesive layer which are stacked with one another in the thickness direction, the first insulating part is attached to the functional part, the second insulating part is attached to the battery cell, and the insulating adhesive layer is bonded between the first insulating part and the second insulating part.

23. The battery according to claim 22, wherein the insulating layer is connected to the first insulating part.

24. An electricity-consuming device, comprising the battery according to any one of claims 1-23, which is configured to supply an electric power.

1

Fig. 1

2

Fig. 2

2

10                    10

B        A        20

Fig. 3

Z

2

10

11

20

20a
20b    24a    34

25 (24)

Z

Fig. 4

<u>20</u>

Fig. 5

<u>2</u>

Fig. 6

26

262

261a

261

Fig. 7

2

10

11

21

20

22

34

20a

Z

262

261

26   24

20b

25

Fig. 8

2

10

11

21
20
22

34

24

Z

C

Fig. 9

30
33
32
341

31

20a

21
20
22

24a
24

342

20b
343
34

Z

Fig. 10

Fig. 11

Fig. 12

Fig. 13

20

24

241    242

21

22

Z

Fig. 14

2

10

11

23    60    24    D

Z

Fig. 15

11

21

231    23

Z    24a    60    22

24

Fig. 16

Fig. 17

Fig. 18

Fig. 19

## INTERNATIONAL SEARCH REPORT

| International application No. |
| --- |
| **PCT/CN2022/119151** |

**A. CLASSIFICATION OF SUBJECT MATTER**

H01M 50/593(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 泄压, 绝缘, 凹部, 避让, battery, decompress+, insulation, recess, dodg+

**C. DOCUMENTS CONSIDERED TO BE RELEVANT**

| Category* | Citation of document, with indication, where appropriate, of the relevant passages | Relevant to claim No. |
| --- | --- | --- |
| X | CN 112086604 A (JIANGSU CONTEMPORARY AMPEREX TECHNOLOGY LTD.) 15 December 2020 (2020-12-15) description, paragraphs 66-121, and figures 1-14 | 1-24 |
| Y | CN 215070190 U (BYD CO., LTD.) 07 December 2021 (2021-12-07) description, paragraphs 28-64, and figures 1-4 | 1-24 |
| Y | CN 211700397 U (CHINA AVIATION LITHIUM BATTERY CO., LTD. et al.) 16 October 2020 (2020-10-16) description, paragraphs 21-28, and figures 1-4 | 1-24 |
| Y | CN 216720176 U (SCIENCE AND TECHNOLOGY CO., LTD.) 10 June 2022 (2022-06-10) description, paragraphs 25-68, and figures 1-9 | 1-24 |
| A | CN 106129288 A (BEIJING ELECTRIC VEHICLE CO., LTD.) 16 November 2016 (2016-11-16) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2022** | **25 November 2022** |

| Name and mailing address of the ISA/CN | Authorized officer |
| --- | --- |
| **China National Intellectual Property Administration (ISA/CN) No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119151**

| Patent document cited in search report | | | Publication date (day/month/year) | Patent family member(s) | | | Publication date (day/month/year) |
|---|---|---|---|---|---|---|---|
| CN | 112086604 | A | 15 December 2020 | US | 2022118861 | A1 | 21 April 2022 |
| | | | | WO | 2022082389 | A1 | 28 April 2022 |
| | | | | EP | 4009434 | A1 | 08 June 2022 |
| | | | | EP | 4009434 | A4 | 08 June 2022 |
| CN | 215070190 | U | 07 December 2021 | None | | | |
| CN | 211700397 | U | 16 October 2020 | None | | | |
| CN | 216720176 | U | 10 June 2022 | None | | | |
| CN | 106129288 | A | 16 November 2016 | None | | | |

Form PCT/ISA/210 (patent family annex) (January 2015)

## EP 4 507 117 A1

**Patent documents cited in the description**

- CN 202221731011